# EUROPEAN PATENT SPECIFICATION

(11) **EP 3 014 982 B1**
(45) Date of publication and mention of the grant of the patent: **17.01.2018**
(21) Application number: 13887671.9
(22) Date of filing: 22.11.2013
(51) Int. Cl.: A01G 9/02, A01G 1/06

(54) **MANUFACTURING METHOD FOR ARTIFICIAL PLANTS AND ARTIFICIAL PLANTS**
HERSTELLUNGSVERFAHREN FÜR KÜNSTLICHE PFLANZEN UND KÜNSTLICHE PFLANZEN
PROCÉDÉ DE FABRICATION DE PLANTES ARTIFICIELLES ET PLANTES ARTIFICIELLES

(30) Priority: 24.06.2013 CN 201310252618
(43) Date of publication of application: 04.05.2016
(73) Proprietor: Jiang, Peilin, Linyi, Shandong 277700 (CN)
(72) Inventor: Jiang, Peilin, Linyi, Shandong 277700 (CN)
(74) Representative: Zacco Sweden AB
(86) International application number: PCT/CN2013/087722
(87) International publication number: WO 2014/205994

(56) References cited:
- CN-A- 103 114 746
- CN-A- 103 283 503
- CN-Y- 2 580 064
- CN-Y- 2 789 360
- CN-Y- 201 323 797
- JP-A- S59 140 812
- JP-A- 2004 089 209
- KR-A- 20120 126 288
- US-A- 2 988 850

## Description

### TECHNICAL FIELD

The invention relates to the field of plant modeling and cultivation, and particularly to a method for producing an artificial plant. Such a method is disclosed, for example, in KR 2012 0126288 A. Furthermore, the invention also relates to an artificial plant produced by the method for producing an artificial plant according to the invention.

### BACKGROUND ART

Nowadays, high-rise buildings spring up one after another, with improved living standards. The high-rise buildings may contribute to not only the concentration of population, but also reduction of a distance between different departments by means of vertical and horizontal pathways within the buildings, which helps to improve work efficiency. Furthermore, the high-rise buildings may ease deficiency of land in cities to some extent. However, many defects are exposed as the progressive development of the high-rise buildings. In the prior art, trees generally cannot grow to the height of a high-rise building which is often high, such that people living or working in the high-rise building are far away from green belts. That is, the environment outside high-rise buildings, such as air quality, is not as good as that of low-rise buildings. People living or working in high-rise buildings cannot take a fresh breath even.

### DISCLOSURE OF THE INVENTION

One object of the invention is to provide a method for producing an artificial plant, to solve the above problems.
Another object of the invention is to provide an artificial plant produced by the method for producing an artificial plant according to the invention.

An embodiment of the invention provides a method for producing an artificial plant, which includes:
manufacturing a three-dimensional fixation frame, and burying a part of the three-dimensional fixation frame into the ground;
providing a plurality of temporary annular growing zones, in a bottom-up manner, on an outer peripheral surface of a part of the three-dimensional fixation frame which is out of ground;
grafting saplings in a preset shape, to form a grafted sapling unit;
planting a plurality of the grafted sapling units in each of the plurality of temporary annular growing zones, and fixing the grafted sapling units onto the three-dimensional fixation frame, with each of the grafted sapling units having one sapling vertically planted inside the temporary annular growing zone and the other sapling outside the temporary annular growing zone;
forming a re-grafted sapling unit by grafting the grafted sapling units which are respectively located in two adjacent temporary annular growing zones, grafting two saplings of the corresponding grafted sapling units of the adjacent temporary annular growing zones with said two saplings placed outside the respective temporary annular growing zone, to form a re-grafted sapling unit; and
forming an artificial plant when the re-grafted sapling units mature after a preset period of time.

An embodiment of the invention provides an artificial plant which is produced by the method for producing an artificial plant according the invention.

In the method for producing an artificial plant and the artificial plant provided in the above embodiments of the invention, a part of the three-dimensional fixation frame, which is rigid, is buried into the ground, multiple temporary growing zones are in a bottom-up manner provided on the outer peripheral surface of a part of the three-dimensional fixation frame which is out of ground, the grafted sapling units are planted in each temporary growing zone and fixed onto the three-dimensional fixation frame, the grafted sapling units, located respectively in two adjacent temporary growing zones, are grafted together, to finally form an artificial plant. The height of the three-dimensional fixation frame may be selected depending on the height of a high-rise building, such that the environment problem can be solved by improving such as the air quality outside a high-rise building. The produced artificial plant is not different from a traditional old tree in modeling, and able to effectively clean the air outside a high-rise building, improving the living environment of people living or working within the high-rise building.

### DETAILED DESCRIPTION OF EMBODIMENTS

The invention will be described in detail hereinafter by means of particular embodiments.

An embodiment of the invention provides a method for producing an artificial plant. The method may include:
manufacturing a three-dimensional fixation frame, and burying a part of the three-dimensional fixation frame into the ground;
providing a plurality of temporary annular growing zones, in a bottom-up manner, on an outer peripheral surface of a part of the three-dimensional fixation frame which is out of ground;
grafting saplings in a preset shape, to form a grafted sapling unit;
planting a plurality of the grafted sapling units in each of the plurality of temporary annular growing zones, and fixing the grafted sapling units onto the three-dimensional fixation frame;
forming a re-grafted sapling unit by grafting the grafted sapling units which are located respectively in two adjacent temporary annular growing zones; and
forming an artificial plant when the re-grafted sapling units mature after a preset period of time.

Further, the step of manufacturing a three-dimensional fixation frame and burying a part of the three-dimensional fixation frame into the ground may include:
manufacturing a three-dimensional fixation frame, and constructing a reinforced concrete base at the bottom of the three-dimensional fixation frame; and
burying the reinforced concrete base into the ground.

Further, the step of providing a plurality of temporary annular growing zones in a bottom-up manner on an outer peripheral surface of a part of the three-dimensional fixation frame which is out of ground may include:
horizontally providing a plurality of temporary annular growing zones around the outer peripheral surface of a part of the three-dimensional fixation frame which is out of ground, in a bottom-up manner, at a certain distance from the ground.
Preferably, the step of grafting saplings in a preset shape to form a grafted sapling unit may include:
selecting two saplings and grafting them crosswise in a preset shape "X"; and
forming a grafted sapling unit after the two saplings mature.
Preferably, the step of planting a plurality of the grafted sapling units in each of the plurality of temporary annular growing zones and fixing the grafted sapling units onto the three-dimensional fixation frame may include:
planting an equal number of the grafted sapling units in each of the plurality of temporary annular growing zones, with each of the grafted sapling units having one sapling vertically planted inside the temporary annular growing zone and the other sapling outside the temporary annular growing zone; and
fixing the two saplings in each of the grafted sapling units onto the three-dimensional fixation frame.
Preferably, the step of forming a re-grafted sapling unit by grafting the grafted sapling units located respectively in two adjacent temporary annular growing zones may include:
grafting two saplings of the corresponding grafted sapling units of the adjacent temporary annular growing zones with said two samplings placed outside the respective temporary annular growing zone, to form a re-grafted sapling unit.

Preferably, the step of forming a re-grafted sapling unit by grafting the grafted sapling units of the adjacent temporary annular growing zones, and the step of forming an artificial plant when the re-grafted sapling units mature after a preset period of time may further include:
planting the grafted sapling units, in the number equal to that of the grafted sapling units in the temporary annular growing zone, around the three-dimensional fixation frame on the ground, where the grafted sapling unit has two saplings both planted underground including one perpendicular to the ground;
grafting said other sapling, which is inclined to the ground, and one sapling of the temporary annular growing zone adjacent thereto, which is placed outside the temporary annular growing zone, to form a re-grafted sapling unit.

Preferably, the step of forming an artificial plant when the re-grafted sapling units mature after a preset period of time may include:
removing the temporary annular growing zones, when the re-grafted sapling units mature after a preset period of time, to form the artificial plant.

The artificial plant provided by the present embodiment may be produced according to any combination of the above methods.

Further, the artificial plant provided by the embodiment may also include an automatic spraying system, arranged within the three-dimensional fixation frame and configured to water an artificial plant.

A preferable embodiment of producing an artificial plant is described as follows.

A three-dimensional fixation frame of a certain height is manufactured. The height may be specifically selected depending on the height of a high-rise building, for example, 200m, 300m or up to 500m. In addition, the three-dimensional fixation frame may be in any shape as long as in a three-dimensional structure. The shape of the three-dimensional fixation frame may be determined based on actual requirements. The three-dimensional fixation frame may be preferably made of steel, for example, the three-dimensional fixation frame may be a three-dimensional steel frame. However it should be limited thereto, that is, other materials may also be used so applicable to the embodiment, as long as they can achieve the same effect described above. The bottom of the manufactured three-dimensional fixation frame may be made into a reinforced concrete base, such that the three-dimensional fixation frame may stably stand on the ground. The constructed reinforced concrete base may be buried underground.

Multiple temporary annular growing zones may be horizontally arranged around the outer peripheral surface of a part of the three-dimensional fixation frame which is out of ground, in a bottom-up manner, at a height of about 10m from the ground. The distance between adjacent temporary growing zones may be 10-15m, but it is not limited thereto.

After multiple saplings are selected, every two saplings may be grafted together in a preset shape "X". A grafted sapling unit is formed, after the two saplings mature, that is, the two saplings have grown to be together.

An equal number of the grafted sapling units may be granted in each temporary annular growing zone. One sapling in the grafted sapling unit may be vertically planted inside the temporary annular growing zone. Not necessary to be planted inside, the other sapling in the grafted sapling unit may be planted outside the temporary annular growing zone, with an inclined angle formed with respect to the horizontal plane. The two saplings in each grafted sapling unit may be fixed onto the three-dimensional fixation frame.

Every two corresponding grafted sapling units in every two adjacent temporary annular growing zones has two inclined saplings, which are placed outside the temporary annular growing zone, and the two inclined saplings may be grafted together to form a re-grafted sapling unit.

The grafted sapling units, in the number equal to that of the grafted sapling units planted in the temporary annular growing zone, may be planted around the three-dimensional fixation frame on the ground. Both the two saplings in the grafted sapling unit are planted underground, with one sapling perpendicular to the ground, and the other one inclined to the ground. The inclined sapling may be grafted together with one sapling of the temporary annular growing zone adjacent thereto, which is placed outside the temporary annular growing zone and inclined with a certain degree to the horizontal plane, to form a re-grafted sapling unit.

The temporary annular growing zones may be removed, when the re-grafted sapling units mature after a preset period of time, which may be about 5 years to 10 years, to form an artificial plant.

An automatic spraying system may be arranged within the three-dimensional fixation frame, to water the artificial grant.

The above embodiments are only preferable embodiments of the invention, and should not be interpreted as limiting the invention. For example, the temporary annular growing zones may not be removed; the temporary annular growing zone may be not away from the ground at a certain distance, such that it is possible that no grafted sapling unit is planted on the ground; two saplings may be grafted together in any shape, which is not limited to the shape "X". Other variations are also applicable to the invention as long as they comply with the spirit and principle of the invention, which will not be enumerated here.

In summary, with the method for producing an artificial plant provided by the embodiment, the existing trees may be combined together into an artificial plant. The produced artificial plant may have the height adapted to the height of a high-rise building, and the appearance not different from a conventional big tree. The three-dimensional fixation frame made of reinforcing steel bars or other durable materials is able to effectively resist a natural disaster caused by snow or wind, thereby having a strong survivability. In addition, since playing a same role as a common tree, the artificial plant provided by the invention not only can substitute an old tree which is difficult to survive, but also can avoid the destruction that migration causes to a big old tree. Daily care problems, such as watering, fertilization and pesticide spraying, of the artificial plants may be solved by means of the automatic spraying system arranged within the three-dimensional fixation frame, such that the artificial plants are more likely to survive and have a long survival time. It should also be noted that, dining or tourist places may also be provided within the fixation frame, in this way, people can have meals or entertainments while enjoying the fresh air. More important, the artificial plant provided by the invention may effectively improve the environment, such as the air quality, surrounding a high-rise building, and may play the same role as a common tree by cleaning air and absorbing carbon dioxide.

The above mentioned embodiments are only preferable embodiments of the invention, which should not be interpreted as limiting the invention. For a person skilled in the art, many variations and changes may be made to the invention. Any modification, equivalent replacement and improvement, made within the spirit and principle of the invention, should fall in the scope of protection of the invention.

## Claims

1. A method for producing an artificial plant, comprising:
manufacturing a three-dimensional fixation frame, and burying a part of the three-dimensional fixation frame into the ground;
providing a plurality of temporary annular growing zones, in a bottom-up manner, on an outer peripheral surface of a part of the three-dimensional fixation frame which is out of ground; the method being **characterized by** further comprising:
grafting saplings in a preset shape, to form a grafted sapling unit;
planting a plurality of the grafted sapling units in each of the plurality of temporary annular growing zones, and fixing the grafted sapling units onto the three-dimensional fixation frame, with each of the grafted sapling units having one sapling vertically planted inside the temporary annular growing zone and the other sapling outside the temporary annular growing zone;
forming a re-grafted sapling unit by grafting the grafted sapling units of the adjacent temporary annular growing zones, grafting two saplings of the corresponding grafted sapling units of the adjacent temporary annular growing zones with said two saplings placed outside the respective temporary annular growing zone, to form a re-grafted sapling unit; and
forming an artificial plant when the re-grafted sapling units mature after a preset period of time.

2. The method for producing an artificial plant according to claim 1, wherein the step of manufacturing a three-dimensional fixation frame and burying a part of the three-dimensional fixation frame into the ground comprises:
manufacturing a three-dimensional fixation frame, and constructing a reinforced concrete base at a bottom of the three-dimensional fixation frame; and
burying the reinforced concrete base into the ground.

3. The method for producing an artificial plant according to claim 1, wherein the step of providing a plurality of temporary annular growing zones in a bottom-up manner on an outer peripheral surface of a part of the three-dimensional fixation frame which is out of ground comprises:
horizontally providing a plurality of temporary annular growing zones around an outer peripheral surface of a part of the three-dimensional fixation frame which is out of ground, in a bottom-up manner, at a certain distance from the ground.

4. The method for producing an artificial plant according to claim 3, wherein the step of grafting saplings in a preset shape to form a grafted sapling unit comprises:
selecting two saplings and grafting them crosswise in a preset shape "X"; and
forming a grafted sapling unit after the two saplings mature.

5. The method for producing an artificial plant according to claim 4, wherein the step of planting a plurality of the grafted sapling units in each of the plurality of temporary annular growing zones and fixing the grafted sapling units onto the three-dimensional fixation frame comprises:
planting an equal number of the grafted sapling units in each of the plurality of temporary annular growing zones, with each of the grafted sapling units having one sapling vertically planted inside the temporary annular growing zone and the other sapling outside the temporary annular growing zone; and
fixing the two saplings in each of the grafted sapling units onto the three-dimensional fixation frame.

6. The method for producing an artificial plant according to claim 5, wherein the step of forming a re-grafted sapling unit by grafting the grafted sapling units of the adjacent temporary annular growing zones comprises:
grafting two saplings of the corresponding grafted sapling units of the adjacent temporary annular growing zones with said two samplings placed outside the respective temporary annular growing zone, to form a re-grafted sapling unit.

7. The method for producing an artificial plant according to claim 6, wherein the step of forming a re-grafted sapling unit by grafting the grafted sapling units of the adjacent temporary annular growing zones and the step of forming an artificial plant when the re-grafted sapling units mature after a preset period of time further comprise:
planting the grafted sapling units, in the number equal to that of the grafted sapling units in the temporary annular growing zone, around the three-dimensional fixation frame on the ground, where the grafted sapling unit has two saplings both planted underground including one perpendicular to the ground; and
grafting said other sapling, which is inclined, and one sapling of the temporary annular growing zone adjacent thereto, which is placed outside the temporary annular growing zone, to form a re-grafted sapling unit.

8. The method for producing an artificial plant according to claim 7, wherein the step of forming an artificial plant when the re-grafted sapling units mature after a preset period of time comprises:
removing the temporary annular growing zones, when the re-grafted sapling units mature after a preset period of time, to form the artificial plant.

9. An artificial plant, **characterized in that** it is produced by the method for producing an artificial plant according to any one of claims 1 to 8.

10. The artificial plant according to claim 9, **characterized in that** it is further comprising an automatic spraying system, arranged within the three-dimensional fixation frame and configured to water the artificial plant.

## Patentansprüche

1. Verfahren zum Herstellen einer künstlichen Pflanze, umfassend:
Herstellen eines dreidimensionalen Befestigungsrahmens und Vergraben eines Teils des dreidimensionalen Befestigungsrahmens in den Boden;
Bereitstellen einer Vielzahl von temporären ringförmigen Wachstumszonen in einer Bottom-up-Weise auf einer Umfangsfläche eines Teils des dreidimensionalen Befestigungsrahmens, der sich außerhalb des Bodens befindet;
welches Verfahren **dadurch gekennzeichnet ist, dass** es weiterhin umfasst:
Pfropfen von Schösslingen in einer voreingestellten Form zur Bildung einer gepfropften Schössling-Einheit;
Pflanzen einer Vielzahl der gepfropften Schössling-Einheiten in jeder der Vielzahl von temporären ringförmigen Wachstumszonen und Befestigen der gepfropften Schössling-Einheiten auf dem dreidimensionalen Befestigungsrahmen, wobei jede der gepfropften Schössling-Einheiten einen innerhalb der temporären ringförmigen Wachstumszone vertikal gepflanzten Schössling und den anderen, außerhalb der temporären ringförmigen Wachstumszone befindlichen Schössling aufweist;
Bilden einer wieder gepfropften Schössling-Einheit durch Pfropfen der gepfropften Schössling-Einheiten der angrenzenden temporären ringförmigen Wachstumszonen, Pfropfen zweier Schösslinge der entsprechenden gepfropften Schössling-Einheiten der angrenzenden temporären ringförmigen Wachstumszonen mit den beiden außerhalb der jeweiligen temporären ringförmigen Wachstumszone angeordneten Schösslingen zur Bildung einer wieder gepfropften Schössling-Einheit; und
Bilden einer künstlichen Pflanze, wenn die wieder gepfropften Schössling-Einheiten nach einem voreingestellten Zeitraum reifen.

2. Verfahren zum Herstellen einer künstlichen Pflanze nach Anspruch 1, wobei der Schritt des Bildens eines dreidimensionalen Befestigungsrahmens und Vergraben eines Teils des dreidimensionalen Befestigungsrahmens in den Boden umfasst:
Herstellen eines dreidimensionalen Befestigungsrahmens und Erstellen einer armierten Betonbasis an einem Boden des dreidimensionalen Befestigungsrahmens; und
Vergraben der armierten Betonbasis in den Boden.

3. Verfahren zum Herstellen einer künstlichen Pflanze nach Anspruch 1, wobei der Schritt des Bereitstellens einer Vielzahl von temporären ringförmigen Wachstumszonen in einer Bottom-Up-Weise auf einer Umfangsfläche eines Teils des dreidimensionalen Befestigungsrahmens, der sich außerhalb des Bodens befindet, umfasst:
horizontales Bereitstellen einer Vielzahl von temporären ringförmigen Wachstumszonen um eine Umfangsfläche eines Teils des dreidimensionalen Befestigungsrahmens, der sich außerhalb des Bodens in einer Bottom-Up-Weise in einem bestimmten Abstand vom Boden befindet.

4. Verfahren zum Herstellen einer künstlichen Pflanze nach Anspruch 3, wobei der Schritt des Pfropfens von Schösslingen in einer voreingestellten Form zur Bildung einer gepfropften Schössling-Einheit umfasst:
Auswählen zweier Schösslinge und Pfropfen derselben kreuzweise in einer voreingestellten Form "X"; und
Bilden einer gepfropften Schössling-Einheit, nachdem die beiden Schösslinge reifen.

5. Verfahren zum Herstellen einer künstlichen Pflanze nach Anspruch 4, wobei der Schritt des Pflanzens einer Vielzahl der gepfropften Schössling-Einheiten in jeder der Vielzahl von temporären ringförmigen Wachstumszonen und Befestigung der gepfropften Schössling-Einheiten an dem dreidimensionalen Befestigungsrahmen umfasst:
Pflanzen einer gleichen Anzahl der gepfropften Schössling-Einheiten in jeder der Vielzahl von temporären ringförmigen Wachstumszonen, wobei jede der gepfropften Schössling-Einheiten einen Schössling, der vertikal innerhalb der temporären ringförmigen Wachstumszone gepflanzt ist, und den anderen, außerhalb der temporären ringförmigen Wachstumszone befindlichen Schössling aufweist;
Befestigen der beiden Schösslinge in jeder der gepfropften Schössling-Einheiten an dem dreidimensionalen Befestigungsrahmen.

6. Verfahren zum Herstellen einer künstlichen Pflanze nach Anspruch 5, wobei der Schritt des Bildens einer wieder gepfropften Schössling-Einheit durch Pfropfen der gepfropften Schössling-Einheiten der angrenzenden temporären ringförmigen Wachstumszonen umfasst:
Pfropfen zweier Schösslinge der entsprechenden gepfropften Schössling-Einheiten der angrenzenden temporären ringförmigen Wachstumszonen mit den beiden außerhalb der jeweiligen temporären ringförmigen Wachstumszone angeordneten Schösslingen zur Bildung einer wieder gepfropften Schössling-Einheit.

7. Verfahren zum Herstellen einer künstlichen Pflanze nach Anspruch 6, wobei der Schritt des Bildens einer wieder gepfropften Schössling-Einheit durch Pfropfen der gepfropften Schössling-Einheiten der angrenzenden temporären ringförmigen Wachstumszonen und der Schritt des Bildens einer künstlichen Pflanze, wenn die wieder gepfropften Schössling-Einheiten nach einem voreingestellten Zeitraum reifen, weiterhin umfassen:
Pflanzen der gepfropften Schössling-Einheiten in der Anzahl gleich der der gepfropften Schössling-Einheiten in der temporären ringförmigen Wachstumszone um den dreidimensionalen Befestigungsrahmen auf dem Boden, wobei die gepfropfte Schössling-Einheit zwei Schösslinge aufweist, die beide unterirdisch gepflanzt sind, einschließlich eines senkrecht zum Boden; und
Pfropfen des anderen geneigten Schösslings und eines Schösslings der daran angrenzenden temporären ringförmigen Wachstumszone, der außerhalb der temporären ringförmigen Wachstumszone angeordnet ist, zur Bildung einer wieder gepfropften Schössling-Einheit.

8. Verfahren zum Herstellen einer künstlichen Pflanze nach Anspruch 7, wobei der Schritt des Bildens einer künstlichen Pflanze, wenn die wieder gepfropften Schössling-Einheiten nach einem voreingestellten Zeitraum reifen, umfasst:
Entfernen der temporären ringförmigen Wachstumszonen, wenn die wieder gepfropften Schössling-Einheiten nach einem voreingestellten Zeitraum reifen, zur Bildung der künstlichen Pflanze.

9. Künstliche Pflanze, **dadurch gekennzeichnet, dass** sie durch das Verfahren zum Herstellen einer künstlichen Pflanze nach einem der Ansprüche 1 bis 8 hergestellt ist.

10. Künstliche Pflanze nach Anspruch 9, **dadurch gekennzeichnet, dass** sie zusätzlich ein automatisches Sprühsystem umfasst, das innerhalb des dreidimensionalen Befestigungsrahmens angeordnet und zur Bewässerung der künstlichen Pflanze ausgelegt ist.

## Revendications

1. Procédé pour produire une plante artificielle, comprenant :
la fabrication d'un cadre de fixation tridimensionnel et l'enterrement d'une partie du cadre de fixation tridimensionnel dans le sol ;
la fourniture d'une pluralité de zones de croissance annulaires temporaires, de manière ascendante, sur une surface périphérique extérieure d'une partie du cadre de fixation tridimensionnel qui est hors sol ;
le procédé étant **caractérisé en ce qu'**il comprend en outre les étapes consistant à :
greffer des jeunes plants sous une forme prédéfinie, pour former une unité de jeunes plants greffés ;
planter une pluralité d'unités de jeunes plants greffés dans chacune de la pluralité de zones de croissance annulaires temporaires, et fixer les unités de jeunes plants greffés sur le cadre de fixation tridimensionnel, chacune des unités de jeunes plants greffés ayant un seul jeune plant planté verticalement à l'intérieur de la zone de croissance annulaire temporaire et l'autre jeune plant à l'extérieur de la zone de croissance annulaire temporaire;
former une unité de jeunes plants regreffés en greffant les unités de jeunes plants greffés des zones de croissance annulaires temporaires adjacentes; greffer deux jeunes plants de l'unité correspondante de jeunes plants greffés des zones de croissance annulaires temporaires adjacentes avec deux jeunes plants disposés à l'extérieur de la zone de croissance annulaire temporaire adjacente, pour former une unité de jeunes plants regreffés; et
former une plante artificielle lorsque les unités de jeunes plants regreffés mûrissent après une période prédéfinie.

2. Procédé de production d'une plante artificielle selon la revendication 1, dans lequel l'étape consistant à fabriquer un cadre de fixation tridimensionnel et à enterrer une partie du cadre de fixation tridimensionnel dans le sol comprend :
la fabrication d'un cadre de fixation tridimensionnel et la construction d'une base de béton armé au fond du cadre de fixation tridimensionnel ; et l'enterrement de la base de béton armé dans le sol.

3. Procédé de production d'une plante artificielle selon la revendication 1, dans lequel l'étape de la fourniture d'une pluralité de zones de croissance annulaires temporaires, de manière ascendante, sur une surface périphérique extérieure d'une partie du cadre de fixation tridimensionnel qui est hors sol comprend :
la mise en place horizontale d'une pluralité de zones de croissance annulaires temporaires autour d'une surface périphérique extérieure d'une partie du cadre de fixation tridimensionnel qui est hors sol, de manière ascendante, à une certaine distance du sol.

4. Procédé de production d'une plante artificielle selon la revendication 3, dans lequel l'étape consistant à greffer de jeunes plants en une forme prédéfinie pour former une unité de jeunes plants greffés comprend:
la sélection de deux jeunes plants et le greffage de ceux-ci en croix sous une forme prédéfinie "X"; et
la formation d'une unité de jeunes plants greffés après la maturation des deux jeunes plants.

5. Procédé de production d'une plante artificielle selon la revendication 4, dans lequel l'étape consistant à planter une pluralité d'unités de jeunes plants greffés dans chacune de la pluralité de zones de croissance annulaires temporaires et à fixer les unités de jeunes plants greffés sur le cadre de fixation tridimensionnel comprend:
la plantation d'un nombre égal des unités de jeunes plants greffés dans chacune de la pluralité de zones de croissance annulaires temporaires, chacune des unités de jeunes plants greffés ayant un seul jeune plant planté verticalement à l'intérieur de la zone de croissance annulaire temporaire et l'autre jeune plant à l'extérieur de la zone de croissance annulaire temporaire; et
la fixation des deux jeunes plants dans chacune des unités de jeunes plants greffés sur le cadre de fixation tridimensionnel.

6. Procédé de production d'une plante artificielle selon la revendication 5, dans lequel l'étape consistant à former une unité de jeunes plants regreffés par greffage des unités de jeunes plants greffés des zones de croissance annulaires temporaires adjacentes comprend :
le greffage de deux jeunes plants de l'unité correspondante de jeunes plants greffés des zones de croissance annulaires temporaires adjacentes avec deux jeunes plants disposés à l'extérieur de la zone de croissance annulaire temporaire respective, pour former une unité de jeunes plants regreffés.

7. Procédé de production d'une plante artificielle selon la revendication 6, dans lequel l'étape consistant à former une unité de jeunes plants regreffés par greffage des unités de jeunes plants greffés des zones de croissance annulaires temporaires adjacentes et l'étape consistant à former une plante artificielle lorsque les unités de jeunes plants regreffés mûrissent après une période de temps prédéterminée comprennent en outre :
la plantation des jeunes plants greffés, dans le nombre égal à celui des unités de jeunes plants greffés dans la zone de croissance annulaire temporaire, autour du cadre de fixation tridimensionnel au sol, où l'unité de jeunes plants greffés présente deux jeunes plants, les deux étant plantés sous sol, dont l'un perpendiculaire au sol ; et
le greffage dudit autre jeune plant, qui est incliné, et d'un jeune plant de la zone de croissance annulaire temporaire adjacente à celui-ci, qui est placé à l'extérieur de la zone de croissance annulaire temporaire, pour former une unité de jeunes plants regreffés.

8. Procédé de production d'une plante artificielle selon la revendication 7, dans lequel l'étape consistant à former une plante artificielle lorsque les unités de jeunes plants regreffés mûrissent après une période de temps prédéterminée comprend :
l'élimination des zones de croissance annulaires temporaires, lorsque les unités de jeunes plants regreffés mûrissent après une période prédéfinie, pour former la plante artificielle.

9. Plante artificielle, **caractérisée en ce qu'**elle est produite par le procédé de production d'une plante artificielle selon l'une quelconque des revendications 1 à 8.

10. Plante artificielle selon la revendication 9, **caractérisée en ce qu'**elle comprend en outre un système de pulvérisation automatique, disposé dans le cadre de fixation tridimensionnel et configuré pour arroser la plante artificielle.
